(19) Europäisches Patentamt
European Patent Office
Office européen des brevets

(11) Veröffentlichungsnummer: **0 675 185 A2**

(12) **EUROPÄISCHE PATENTANMELDUNG**

(21) Anmeldenummer: **95104296.9**

(22) Anmeldetag: **23.03.95**

(51) Int. Cl.6: **C09J 163/00**, C08L 63/00, C08G 59/10

(30) Priorität: **28.03.94 DE 4410786**

(43) Veröffentlichungstag der Anmeldung: **04.10.95 Patentblatt 95/40**

(84) Benannte Vertragsstaaten: **AT BE CH DE DK ES FR GB IE IT LI NL PT SE**

(71) Anmelder: **HOECHST AKTIENGESELLSCHAFT**
**D-65926 Frankfurt am Main (DE)**

(72) Erfinder: **Marten, Manfred**
**Am Eiskeller 55**
**D-55126 Mainz (DE)**
Erfinder: **Wehner, Bernhard**
**Hofackerstrasse 1**
**D-65606 Villmar (DE)**

(54) **Elastische, Amin-modifizierte Epoxidharz-Zusammensetzung.**

(57) Elastische Epoxidharzzusammensetzung aus Epoxidharzen (A), die durch Umsetzung von Polyoxyalkylenaminen, Polyepoxiden und gegebenenfalls Polycarbonsäuren erhalten werden, Epoxidharzen (B), die durch Umsetzung von sterisch gehinderten Aminen und Polyepoxiden erhalten werden, weiteren Epoxiden, Härtungsmitteln und gegebenenfalls weiteren Zusätzen, die besonders geeignet als Einkomponentenklebstoff ist.

EP 0 675 185 A2

Epoxidharze, insbesondere solche, die aus Bisphenol A und Epichlorhydrin hergestellt werden, sind bekannte Rohstoffe für die Herstellung von qualitativ hochwertigen Gießharzen, Beschichtungsmassen und Klebstoffen. Diese zum Beispiel mit Polyaminen gehärteten aromatischen Epoxidharze besitzen neben guter Chemikalien- und Lösungsmittelbeständigkeit eine gute Haftfestigkeit auf vielen Untergründen. Häufig ist die Anwendbarkeit dieser Harz/Härter-Systeme jedoch begrenzt durch eine unzureichende Elastizität bzw. Flexibilität im vernetzten Zustand. Insbesondere für Anwendungen, bei denen Temperaturwechselbelastungen durch eine hohe Dehnbarkeit der Beschichtungsstoffe aufgefangen werden müssen, reicht die Elastizität der unmodifizierten Standardepoxidharzsystemenicht aus. Auf dem Klebstoffsektor werden Epoxidharzsysteme benötigt, die noch bei tiefen Temperaturen, d. h. unter 0 °C, ausreichend elastisch sind. Beispielsweise werden in der Automobilindustrie Epoxidharzklebstoffe verwendet, die in ausgehärtetem Zustand nur wenig flexibel sind. Die mit ihnen erhaltenen Verklebungen weisen zwar eine hohe Zugscherfestigkeit auf, platzen aber bei seitlichem Angriff durch Abschälen leicht ab. Es ist ein bekanntes Problem, daß Klebstoffe, mit denen sich hohe Zugscherfestigkeiten erzielen lassen, häufig nur eine geringe Winkelschälfestigkeit ergeben.

In der Automobilindustrie wird beim Verkleben von Blechen häufig so vorgegangen, daß der Klebstoff während des Karosserierohbaus auf geölten Blankblechen zunächst warm aufgebracht, aber noch nicht ausgehärtet wird. Beim Abkühlen erstarrt der Klebstoff. Im Fertigungsprozeß werden die vorgefertigten Teile bzw. die Rohkarossen vor der Härtung in einem Ofen zur Entfernung des Walzfettes in Wasch-, Phosphatier- und kataphoretischen Tauchlack-Bädern behandelt. Es besteht daher die Forderung nach Klebstoffen, die bereits vor der Aushärtung eine ausreichende Auswaschbeständigkeit aufweisen. Insbesondere muß das gehärtete Klebstoffsystem das Blankblech unter der Klebestelle ausreichend vor Korrosion schützen.

Prinzipiell kann man extern durch Weichmacherzusatz oder intern durch Verringerung der Vernetzungsdichte die Elastizität von Epoxidharzsystemen erhöhen. Externe Elastifizierungsmittel sind jedoch nicht reaktiv und werden nicht in das Duromer-Netzwerk eingebaut. Diese Art der Modifizierung ist allerdings nur auf spezifische Anwendungsgebiete beschränkt, da sie eine Reihe von Nachteilen aufweist.

So führen diese Zusätze zu einer starken Störung der Duromerstruktur, sind in ihrem Weichmachungseffekt bei tiefen Temperaturen begrenzt, neigen bei Temperaturbeanspruchung und Alterung zum Ausschwitzen und die gehärteten Systeme verspröden. Zur internen Erhöhung der Elastizität werden mit den Epoxidharzen oder Härtern reagierende Verbindungen, die in die Vernetzung mit einbezogen werden, zugesetzt. Im einzelnen wird die elastifizierende Wirkung durch Einbau von langkettigen aliphatischen oder stark verzweigten Zusätzen in die Harz- oder Härterkomponente erreicht.

Bei Vazirani [Adhesives Age, Oct. 1980, S. 31 - 35], werden flexible Ein-und Zweikomponenten-Epoxidharzsysteme auf Basis von Polyoxypropylendi- und -triaminen beschrieben. Die Härtung des Einkomponentensystems erfolgt mit Dicyandiamid.

Aus der US 4,423,170 sind wasserverdünnbare Epoxidharz-Zusamensetzungen bekannt, die aus (A) Diepoxiden, erhalten durch Umsetzung von Diepoxiden und Polyoxyalkylenaminen mit einer Molmasse von 900 bis 2500 g/mol und (B) einem latenten Härter in wäßrigem Medium bestehen.

Um eine ausreichende Wasserlöslichkeit des Systems zu gewährleisten, müssen die Polyoxyalkylenamine hohe Anteile Äthylenoxid aufweisen. Mit solchen Aminen aufgebaute EP-Systeme können keine ausreichenden Korrosionsschutzbeständigkeiten bei Verwendung als Klebstoff, beispielsweise für die Automobilindustrie, erzielt werden.

Gegenstand der EP-B 0 109 174 ist eine Epoxidharz-Zusammensetzung enthaltend (A) ein Polyepoxid und (B) ein Aushärtungsmittel, dadurch gekennzeichnet, daß das Polyepoxid mit 50 bis 70 Gew.-% eines Polyoxyalkylenmonoamins mit einer Molmasse von 900 bis 2000 g/mol umgesetzt wurde.Die in dieser EP-B 0 109 174 beschriebene Harz-Härter-Mischung ist in Form eines Ein- oder Zweikomponentensystem brauchbar als flexibler Klebstoff, zeichnet sich durch eine niedrige Viskosität aus und kann deshalb ohne Zugabe von Lösungsmittel verwendet werden. Weiterhin wird festgestellt, daß lediglich eine Serie von Addukten, nämlich die aus Jeffamine M-1000 hergestellten, eine einheitlich niedrige Viskosität unabhängig vom Amingehalt zeigt. Außerdem wird darauf hingewiesen, daß Zusammensetzungen mit weniger als 50 % Polyoxyalkylenmonoamin geringere Flexibilität bei hoher Viskosität und Zusammensetzungen mit mehr als 70 % Polyoxyalkylenmonoamin geringere Adhäsionskraft und abnehmende Viskosität aufweisen.

In der Patentanmeldung DE-P 43 42 721.9 wird eine Epoxidharz-Zusammensetzung beschrieben, bestehend aus

(A) Verbindungen, die mindestens zwei 1,2-Epoxidgruppen enthalten, die Umsetzungsprodukte sind aus

- A1) Verbindungen mit mindestens zwei 1,2-Epoxidgruppen pro Molekül
- A2) Polyoxyalkylenmonoaminen mit einer Molmasse von 130 bis 900 - g/mol und gegebenenfalls von
- A3) Polyoxyalkylenmonoaminen mit einer Molmasse von 900 bis 5000 g/mol und gegebenenfalls von
- A4) Polycarbonsäuren und

(B) Härtungsmitteln und

(C) gegebenenfalls üblichen Zusätzen,

und in der Patentanmeldung DE-P 43 42 722.7 eine elastische Epoxidharz-Zusammensetzung bestehend aus

(A) Verbindungen mit mindestens zwei 1,2-Epoxidgruppen, die Umsetzungsprodukte sind aus

A1) Verbindungen mit mindestens zwei 1,2-Epoxidgruppen pro Molekül

A2) Polyoxyalkylenmonoaminen mit einer molaren Masse (Zahlenmittel) größer als 900 g/mol, die gegebenenfalls einen molaren Anteil von bis zu 20 % Oxyäthyleneinheiten bezogen auf die Gesamtmenge aus Oxypropylen- und Oxyäthyleneinheiten enthalten können,

A3) gegebenenfalls Polycarbonsäuren und

(B) Härtungsmitteln und

(C) gegebenenfalls üblichen Zusätzen,

Beide Schriften offenbaren reaktive Klebstoffe, die hohe Schäl- und Zugscherfestigkeiten liefern und sich insbesondere durch einen hohen Korrosionsschutz des gehärteten Systems auf nicht entfetteten Blechen auszeichnen. Die in vielen Kombinationen noch zu hohe Viskosität der Epoxidzusammensetzungen ist bei der Herstellung und Verarbeitung der Klebstoffe häufig nachteilig. Abmischungen mit bekannten reaktiven oder nichtreaktiven Verdünnern führen z. B. zu geringerer Elastizität, zu unzureichender Korrosionsschutzbeständigkeit und Festigkeit der Verklebungen.

Aufgabe der vorliegenden Erfindung ist es, reaktive elastische Epoxidharzsysteme bereitzustellen, die günstige mechanische Eigenschaften und gute Korrosionsbeständigkeiten des gehärteten Klebharzsystems liefern und sich aber darüber hinaus aufgrund einer niedrigen Viskosität leicht herstellen und applizieren lassen.

Es wurde nun überraschenderweise gefunden, daß mit der erfindungsgemäßen Epoxidharz-Zusammensetzung gegenüber den in DE-P 43 42 721.9 und DE-P 43 42 722.7 beschriebenen Systemen bei gleichbleibend guten Korrosionsschutz-und Festigkeitswerten deutlich niedrigerviskose Epoxid- bzw Epoxid-Härter-Mischungenerhalten werden, die außerdem eine deutlich verbesserte Tieftemperaturelastizität aufweisen.

Die vorliegende Erfindung betrifft daher eine Epoxidharzzusammensetzung bestehend aus

(A) Verbindungen, die mindestens zwei 1,2-Epoxidgruppen enthalten, die Umsetzungsprodukte sind aus

(A1) Verbindungen mit mindestens zwei 1,2-Epoxidgruppen pro Molekül

(A2) gegebenenfalls in Abmischung mit Mono-Epoxiden,

(A3) Polyoxyalkylenaminen und gegebenenfalls

(A4) Polycarbonsäuren

(B) Verbindungen, die mindestens zwei 1,2-Epoxidgruppen enthalten, die Umsetzungsprodukte sind aus

(B1) Verbindungen mit mindestens zwei 1,2-Epoxidgruppen pro Molekül

(B2) gegebenenfalls in Abmischung mit Mono-Epoxiden,

(B3) Aminen der Formel

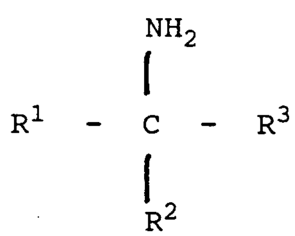

in der bedeuten

$R^1$ verzweigter oder unverzweigter aliphatischer, cycloaliphatischer, araliphatischer oder aromatischer, gegebenenfalls durch Hydroxy-, Alkoxy-oder Halogen-Gruppen substituierter Kohlenwasserstoffrest mit 1 bis 30 Kohlenstoffatomen,

$R^2$ und $R^3$ jeweils unabhängig voneinander Wasserstoff oder einen der unter $R^1$ genannten Reste, wobei $R^3$ bevorzugt Wasserstoff ist, mit der Maßgabe, daß die Aminogruppe nicht direkt an einem Aromaten gebunden ist und für den Fall, daß $R^2$ und $R^3$ Wasserstoff sind, der verbleibende Rest $R^1$ einer der folgenden Substituenten ist

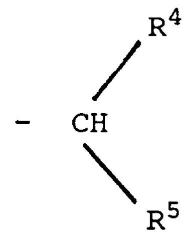

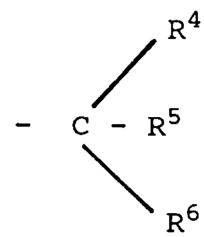

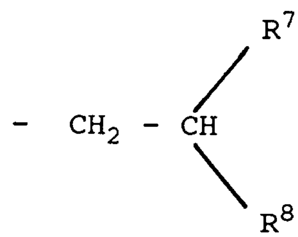

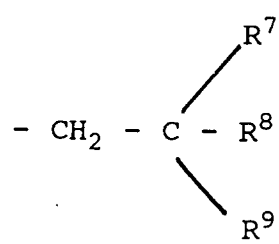

wobei die Reste

$R^4$ bis $R^9$ jeweils unabhängig voneinander die Bedeutung verzweigter oder unverzweigter aliphatischer, cycloaliphatischer, araliphatischer oder aromatischer, gegebenenfalls durch Hydroxy-, Alkoxy-oder Halogen-Gruppen substituierter Kohlenwasserstoffrest mit 1 bis 30 Kohlenstoffatomen haben, und

$R^1$ und $R^2$ einen gegebenenfalls substituierten cycloaliphatischen Ring mit bis zu 8 Kohlenstoffatomen bilden können, wobei $R^3$ dann ein Wasserstoffatom bedeutet, und

(C) 1,2-Epoxidverbindungen, die nicht gleich (A1), (A2), (B1) oder (B2) sind und/oder nicht umgesetzte Anteile der Verbindungen (A1), (A2), (B1) und (B2) aus der Herstellung der Verbindungen (A) und (B), und

(D) Härtungsmitteln und

(E) gegebenenfalls weiteren Zusätzen.

Vorzugsweise beträgt die Masse der Komponente (B) 5 bis 150 % von der Summe der Massen der Komponenten (A) und (C). Als Poly-Epoxidverbindungen (A1), (B1) und (C) kommen eine Vielzahl der hierfür bekannten Verbindungen in Betracht, die mehr als eine Epoxidgruppe, vorzugsweise zwei Epoxidgruppen, pro Molekül enthalten. Diese Epoxidverbindungen (Epoxidharze) können dabei sowohl gesättigt

als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Äthergruppierungen und ähnliche. Vorzugsweise handelt es sich dabei um Glycidyläther, die sich von mehrwertigen Phenolen, insbesondere Bisphenolen sowie Novolaken ableiten und deren Molmassen bezogen auf die Anzahl der Epoxygruppen $M_E$ ("Epoxidäquivalentgewichte", "EV-Wert") zwischen 100 und 500, insbesondere jedoch zwischen 150 und 250 g/mol, liegen.

Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), 4,4'-Dihydroxydiphenylcyclohexan, 4,4'-Dihydroxy-3,3'-dimethyldiphenylpropan,4,4'-Dihydroxydiphenyl,4,4'-Dihydroxybenzophenon, Bis-(4-hydroxyphenyl)-1,1-äthan, Bis-(4-hydroxyphenyl)-1,1-isobutan,2,2-Bis-(4-hydroxy-tert.butylphenyl)-propan, Bis-(2-hydroxynaphthyl)-methan, 1,5-Dihydroxynaphthalin, Tris-(4-hydroxyphenyl)-methan, Bis-(4-hydroxyphenyl)-äther, Bis-(4-hydroxyphenyl)-sulfon u. a. sowie die Chlorierungs- und Bromierungsprodukte der vorstehend genannten Verbindungen wie beispielsweise Tetrabrom-Bisphenol A. Ganz besonders bevorzugt, insbesondere als Epoxidverbindungen (A1), werden flüssige Diglycidyläther auf Basis von Bisphenol A und Bisphenol F mit einem Epoxidäquivalentgewicht von 180 bis 190 g/mol.

Es können auch Polyglycidyläther von Polyalkoholen verwendet werden, wie z. B. Äthandiol-1,2-diglycidyläther, Propandiol-1,2-diglycidyläther, Propandiol-1,3-diglycidyläther, Butandioldiglycidyläther, Pentandioldiglycidyläther (auch Neopentylglykoldiglycidyläther), Hexandioldiglycidyläther, Diäthylenglykoldiglycidyläther, Dipropylenglykoldiglycidyläther, höhere Polyoxyalkylenglykoldiglycidyläther, wie z. B. höhere Polyoxyäthylenglykoldiglycidyläther und Polyoxypropylenglykoldiglycidyläther, Mischpolyoxyäthylen-propylenglykoldiglycidyläther, Polyoxytetramethylenglykoldiglycidyläther, Polyglycidyläther des Glycerins, des 1,2,6-Hexantriols, Trimethylolpropans, Trimethyloläthans, Pentaerythrits, Sorbitols, Polyglycidyläther von oxalkylierten Polyolen (wie z. B. des Glycerins, Trimethylolpropans, Pentaerythrits u. a.), Diglydicyläther des Cyclohexandimethanols, Bis-(4-hydroxycyclohexyl)methans und 2,2-Bis-(4-hydroxycyclohexyl)propans, Polyglycidyläther des Rizinusöls, Triglycidyltris-(2-hydroxy-äthyl)-isocyanurat Ganz besonders bevorzugt, insbesondere als Epoxidverbindungen (B1), werden Polyoxyalkylenglykoldiglycidyläther, insbesondere Polyoxypropylenglykoldiglycidyläther mit einem Epoxidäquivalentgewicht von 150 bis 800, insbesondere von 300 bis 400 g/mol, eingesetzt.

Weiterhin kommen als Komponenten (A1) und (B1) in Frage Poly-(N-glycidyl) Verbindungen, die erhältlich sind durch Dehydrohalogenierung der Reaktionsprodukte von Epichlorhydrin und Aminen wie Anilin, n-Butylamin, Bis-(4-aminophenyl)methan, m-Xylylendiamin oder Bis-(4-methylaminophenyl)methan. Zu den Poly-(N-glycidyl)-Verbindungen zählen aber auch Triglycidylisocyanurat, Triglycidylurazol sowie deren Oligomere, N,N'-Diglycidylderivate von Cycloalkylenharnstoffen und Diglycidylderivate von Hydantoinen u. a.

Weiterhin können auch Polyglycidylester von Polycarbonsäuren eingesetzt werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Tetrahydrophthalsäure, Hexahydrophthalsäure, 2,6-Naphthalindicarbonsäure und höhere Dicarbonsäurediglycidylester, wie z. B. dimerisierte bzw. trimerisierte Linolensäure, erhält. Beispiele sind Adipinsäurediglycidylester, Phthalsäurediglycidylester und Hexahydrophthalsäurediglycidylester.

Weiterhin seien genannt Glycidylester ungesättigter Carbonsäuren und epoxidierte Ester von ungesättigten Alkoholen bzw. ungesättigten Carbonsäuren.

Zusätzlich zu den Polyglycidyläthern können geringe Mengen von Monoepoxiden gemäß (A2) und (B2) (reaktive Verdünner), wie z. B. Methylglycidyläther, Butylglycidyläther, Allylglycidyläther, Äthylhexylglycidyläther, langkettige aliphatische Glycidyläther, wie z. B. Cetylglycidyläther und Stearylglycidyläther, Monoglycidyläther eines höheren isomeren Alkoholgemisches, Glycidyläther einer Mischung von $C_{12}$ bis $C_{13}$ Alkoholen, Phenylglycidyläther, Kresylglycidyläther, p-t-Butylphenylglycidyläthers, p-Octylphenylglycidyläther, p-Phenyl-phenylglycidyläther, Glycidyläther eines oxalkylierten Laurylalkohols sowie Monoepoxide wie beispielsweise epoxidierte einfachungesättigte Kohlenwasserstoffe (Butylen-, Cyclohexen-, Styroloxid), halogenhaltige Epoxide, wie z. B. Epichlorhydrin, in Massenanteilen bis zu 30 %, vorzugsweise 10 bis 20 %, bezogen auf die Masse der Polyglycidyläther mitverwendet werden.

Eine ausführliche Aufzählung der geeigneten Epoxidverbindungen findet sich in dem Handbuch "Epoxidverbindungen und Epoxidharze" von A. M. Paquin, Springer Verlag, Berlin 1958, Kapitel IV, und in Lee Neville "Handbook of Epoxy Resins", 1967, Chapter 2.

Es können jeweils auch Mischungen von mehreren Epoxidharzen verwendet werden.

Als Polyoxyalkylenamine (A3) sind geeignet beispielsweise Polyoxyalkylendiamine und Polyoxyalkylenmonoamine. Geeignete Polyoxyalkylendiamine sind zum Beispiel Verbindungen der Formel

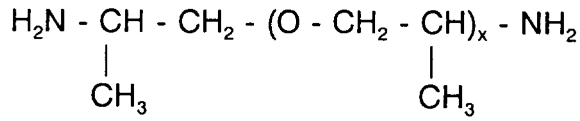

wie ®Jeffamine D 230 (durchschnittliche Molmasse M = 230 g/mol), ®Jeffamine D 400 (M = 400 g/mol), ®Jeffamine D 2000 (M = 2000 g/mol) u. a. von Texaco Chemical Company sowie Verbindungen der Formel

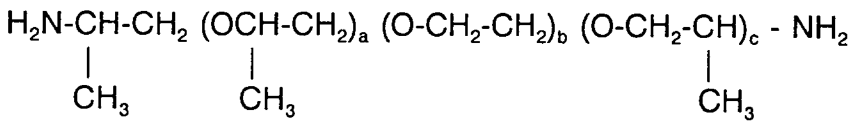

wie ®Jeffamine ED 600 (M = 600 g/mol) (a + c = 2,5; b = 8,5); ®Jeffamine ED 900 (M = 900 g/mol) (a + c = 2,5; b = 15,5); ®Jeffamine ED 2001 (M = 2000 g/mol) (a + c = 2,5; b = 40,5) u. a. ebenfalls von Texaco.

Bevorzugt werden Polyoxyalkylenmonoamine mit einer Molmasse von 130 bis 900 g/mol, gegebenenfalls in Abmischung mit solchen der Molmasse 900 bis 5000 g/mol.

Die Polyoxypropylenmonoamine, die sich besonders brauchbar zur Bildung der Epoxide (A) erwiesen haben, sind Verbindungen der Formel

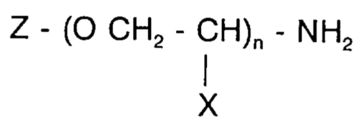

wobei X Wasserstoff, ein Methyl- oder Äthylrest, Z ein Kohlenwasserstoffrest mit 1 bis 5 Kohlenstoffatomen und n ein Mittelwert ist, der zwischen 2 und 50 liegt.

Bevorzugt werden Polyoxyalkylenmonoamine der Formel

$Z - (O\text{-}CH_2\text{-}CH_2)_y - [O\text{-}CH_2\text{-}CH(CH_3)]_x - NH_2$

eingesetzt, in der Z ein Kohlenwasserstoffrest mit 1 bis 5 Kohlenstoffatomen ist, insbesondere ein Methylrest und y 0 bis 10 und x 1 bis 41 bedeuten
und insbesondere Polyoxyalkylenmonoamine der Formel

$Z - O - CH_2 - CH_2 - [O\text{-}CH_2\text{-}CH\text{-}(CH_3)]_z\ NH_2$

in der z 1 bis 15, insbesondere 9, ist, verwendet.

Einige ausgewählte dervorstehend beschriebenen Monoamin-Blockpolymere mit Oxyäthylen- und Oxypropylengruppen werden z. B. von der Firma Texaco Chemical Co., Inc. unter der Handelsbezeichnung ®Jeffamine M-Serie vertrieben.

Besonders erwähnt seien hier die ®Jeffamine-Typen M 600, M 1000, M 2005 und M 2070.

Die gegebenenfalls mitverwendeten Polycarbonsäuren (A4) sind vorzugsweise langkettige Dicarbonsäuren. Beispielsweise seien genannt aliphatische Dicarbonsäuren, deren aliphatischer Rest im allgemeinen 1 bis 50, vorzugsweise 2 bis 44 Kohlenstoff-Atome enthält, wie z. B. Bernsteinsäure, Glutarsäure, Adipinsäure, Korksäure, Azelainsäure, Sebacinsäure und Dodecandisäure. Geeignete cycloaliphatische Dicarbonsäuren, deren cycloaliphatischer Rest zumeist 5 bis 12, vorzugsweise 6 bis 8 C-Atome umfaßt, sind z. B. die verschiedenen Cyclohexandicarbonsäure-Isomeren, Hexahydrophthalsäure und Tetrahydrophthalsäure.

Eingesetzt werden bevorzugt dimere Fettsäuren, die aus ein- oder mehrfach ungesättigten natürlichen oder synthetischen einbasischen aliphatischen Fettsäuren mit 16 bis 22 Kohlenstoffatomen, bevorzugt 18 C-Atomen, nach bekannten Methoden, wie z. B. thermische oder katalytische Polymerisation oder durch Copolymerisation in Gegenwart von polymerisationsfähigen Verbindungen, wie z.B. Styrol oder Homologen und Cyclopentadien hergestellt werden. Insbesondere werden Dimerfettsäuren mit einer Säurezahl von 150 bis 230 mg KOH / g verwendet.

Die Komponente (A4) können auch Oxalkylen-, vorzugsweise Oxäthylengruppen enthaltende Dicarbonsäuren sein mit der Formel

$HOOC - CH_2 - [OR^{10}]_n - O - CH_2\ COOH$

in der $R^{10}$ ein verzweigter oder unverzweigter Alkylenrest mit 2 bis 5, vorzugsweise 2 C-Atomen und n 0 oder eine ganze Zahl von 1 bis 300, vorzugsweise 1 bis 50 und insbesondere 1 bis 25, ist. Beispiele für diese Verbindungen sind: 3,6-Dioxaoctandisäure, 3,6,9-Trioxaundecandisäure, Polyglykoldisäure mit einer Molmasse von 400 bis 800, bevorzugt von ca. 600 g/mol oder Mischungen aus solchen Säuren. Die Herstellung dieser Verbindungen ist bekannt (vgl. beispielsweise die DE-OS 2 936 123) und erfolgt z. B. durch Oxidation von Polyglykolen in Gegenwart von Katalysatoren.

Als Amine (B3) können zur Herstellung der erfindungsgemäßen 1,2-Epoxidverbindungen beispielsweise eingesetzt werden t-Butylamin (2-Methyl-2-aminopropan), 2-Methyl-2-butylamin, t-Alkylamine der Rohm und Haas Company wie ®Primene TOA (t-Octylamin = 1,1,3,3-Tetramethylbutylamin), ®Primene 81 R (t-Alkylamine C 12 - C 14), ®Primene JM-T (t-Alkylamine C 16 - C 22), 2-Amino-2-methyl-1-propanol, 2-Amino-2-äthyl-1,3-propandiol, Tris(hydroxymethyl)aminomethan, Isopropylamin (2-Aminopropan), sek. Butylamin (2-Aminobutan), 2-Amino-1-butanol, 3-Methyl-2-butylamin, 2-Pentylamin, 3-Pentylamin, Cyclopentylamin, 4-Methyl-2-pentylamin, Cyclohexylamin, 2-Heptylamin, 3-Heptylamin, 2-Methylcyclohexylamin, 3-Amino-2,4-dimethylpentan, 6-Methyl-2-heptanamin, 1-Phenyläthylamin, 1-Methyl-3-phenylpropylamin, Cyclododecylamin, bevorzugt sind t-Alkylamine mit 4 bis 22 Kohlenstoffatomen, besonders bevorzugt sind 2-Aminobutan und Cyclohexylamin.

Weiterhin sind geeignet: Isobutylamin (2-Methyl-1-propanamin), 2-Methylbutylamin (1-Amino-2-methylbutan), Isoamylamin (Isopentylamin = 1-Amino-3-methylbutan), Furfurylamin, Benzylamin, 4-Methoxybenzylamin, 2-Äthylhexylamin, Isononylamin (Gemisch isomerer Nonylamine, das zu ca. 90 % aus 3,5,5-Trimethylhexylamin besteht) u. a., besonders bevorzugt ist 2-Äthylhexylamin.

Es können auch Mischungen verschiedener Monoamine verwendet werden.

Die erfindungsgemäßen Epoxidverbindungen (A) werden in der Weise hergestellt, daß die Epoxide (A1), gegebenenfalls in Abmischung mit den Monoepoxiden gemäß (A2) mit den Polyalkylenmonoaminen (A3) unter Rühren und im allgemeinen unter Erwärmen solange umgesetzt werden, bis das theoretisch berechnete Epoxidäquivalentgewicht erreicht ist, d. h. bis alle aktiven Wasserstoffe des Polyoxyalkylenmonoamins mit den im Überschuß vorhandenen Epoxidgruppen reagiert haben. Die Reaktionstemperaturen werden dabei im allgemeinen bei 25 bis 200 °C gehalten, vorzugsweise bei 50 bis 150 °C, insbesondere bei 80 bis 130 °C. Je nach Temperatur und eingesetzten Epoxiden und Aminen liegen die Reaktionszeiten allgemein zwischen wenigen Minuten und mehreren Stunden. In den meisten Fällen sind keine zusätzlichen Katalysatoren zur quantitativen Umsetzung der Amine mit den Epoxiden notwendig.

Bei der Herstellung der erfindungsgemäßen Epoxidverbindungen (A) können auch verschiedene Epoxide (A1) und gegebenenfalls (A2) als Mischung eingesetzt und direkt mit den Polyoxyalkylenmonoaminen (A3) umgesetzt werden. Es kann aber auch ein gezielter, stufenweiser Aufbau mit verschiedenen Epoxiden nacheinander erfolgen der Art, daß zunächst ein Epoxid I gemäß (A1) mit einem Überschuß der Polyoxyalkylenmonoamine, z. B. 2 aktive Aminwasserstoffe pro Epoxidäquivalent, und nach vollständiger Umsetzung der Epoxidgruppen des Epoxids I ein weiteres Epoxid II gemäß (A1) im Überschuß mit den noch verfügbaren aktiven Aminwasserstoffen zur Reaktion gebracht wird.

Die gegebenenfalls durchzuführende Modifikation mit den Polycarbonsäuren (A4) erfolgt hauptsächlich durch Umsetzung des Epoxids (A1) mit der Säurekomponente (A4), vor der Reaktion mit den Monoaminen (A3), kann aber prinzipiell auch nach der Epoxid(A1)-Amin(A3)-Reaktion ausgeführt werden.

Die Reaktion der Polycarbonsäure (A4) mit den Epoxidverbindungen (A1) und (A2) oder dem Addukt aus (A1), (A2) und (A3) kann bei höheren Temperaturen ohne Katalysatoren durchgeführt werden, läuft aber mit Katalysatoren wesentlich schneller ab und ergibt viel niedrigere Restsäurezahlen.

Für die gezielte und beschleunigte Umsetzung der Carboxylgruppen der Verbindungen (A4) und der Epoxidgruppen der Verbindungen (A1) und (A2) bzw. der Umsetzungsprodukte der Verbindungen (A1) und (A2) mit den Verbindungen (A3) können als Katalysatoren beispielsweise eingesetzt werden: Natriumhydroxid, Kaliumhydroxid, Lithiumhydroxid, Natriumcarbonat, Chromverbindungen wie $CrCl_3$, $CrO_3$, Chromacety-

lacetonat, Imidazole, Imidazoline, quaternäre Ammonium-und Phosphoniumverbindungen wie Benzyltrimethylammoniumchlorid, Tetraäthylammoniumchlorid, Tetramethylammoniumchlorid, Benzyltrimethylammoniumhydroxid, Benzyldodecyldimethylammoniumchorid, Methyltriphenylphosphoniumjodid,Triphenyl-(2,5-dihydroxyphenyl)-phosphoniumhydroxid,Äthytriphenylphosphoniumacetat, Triphenyläthylphosphoniumbromid sowie organische Phosphine wie Triphenylphosphin, Tricyclohexylphosphin, Tributylphosphin, Cyclohexyloctylphosphin, weiterhin aromatische Amine wie N,N-Dimethylanilin, N,N-Diäthylanilin, N,N-Dimethyl-p-toluidin, N,N-Diäthyl-p-toluidin sowie Amine wie Triäthylamin, Tributylamin, Benzyldimethylamin, Benzyldiäthylamin, Triäthylendiamin, N-Methylmorpholin, N-Methyl-piperidin, N-Alkylamine wie z. B. n-Butylamin und Alkanolamine wie Diäthanolamin, Dimethyläthanolamin, Diäthyläthanolamin, Dibutyläthanolamin, Triäthanolamin, Triisopropanolamin, Methyldiäthanolamin, Di-(3-phenoxy-2-hydroxy-propyl)-alkylamine wie z. B. Di-(3-phenoxy-2-hydroxy-propyl)-n-butylamin u. a.
Diese Katalysatoren werden im allgemeinen in Mengen von 0,01 bis 5 %, vorzugsweise 0,05 bis 2 %, bezogen auf die Summe der Massen von (A1) bis (A4), eingesetzt.

Die erfindungsgemäßen Epoxidverbindungen (B) werden in der Weise hergestellt, daß die Epoxide (B1), gegebenenfalls in Abmischung mit den Monoepoxiden gemäß (B2), mit den Monoaminen (B3) unter Rühren und im allgemeinen unter Erwärmen solange umgesetzt werden, bis das theoretisch berechnete Epoxidäquivalentgewicht erreicht ist, d. h. bis alle aktiven Wasserstoffe des Monoamins mit den im Überschuß vorhandenen Epoxidgruppen reagiert haben. Die Reaktionstemperaturen werden dabei im allgemeinen bei 25 bis 200 °C gehalten, vorzugsweise bei 50 bis 150 °C, insbesondere bei 60 bis 130 °C. Je nach Temperatur und eingesetzten Epoxiden und Aminen liegen die Reaktionszeiten allgemein zwischen wenigen Minuten und mehreren Stunden. In den meisten Fällen sind keine zusätzlichen Katalysatoren zur quantitativen Umsetzung der Amine mit den Epoxiden notwendig. Vorteilhaft ist es, insbesondere bei niedrig siedenden Aminen, mit einem Überdruck z. B. bis 5 bar zu arbeiten.

Bei der Herstellung der erfindungsgemäßen Epoxidverbindungen (B) können auch verschiedene Epoxide (B1) und gegebenenfalls (B2) als Mischung eingesetzt und direkt mit den Monoaminen (B3) umgesetzt werden. Es kann aber auch ein gezielter, stufenweiser Aufbau mit verschiedenen Epoxiden nacheinander erfolgen der Art, daß zunächst ein Epoxid I gemäß (B1) mit einem Überschuß der Monoamine, z. B. 2 aktive Aminwasserstoffe pro Epoxidäquivalent, und nach vollständiger Umsetzung der Epoxidgruppen des Epoxids I ein weiteres Epoxid II gemäß (B1) im Überschuß mit den noch verfügbaren aktiven Aminwasserstoffen zur Reaktion gebracht wird.

Auf entsprechende Weise können auch verschiedene Amine (B3) sowohl als Mischung als auch in einem stufenweisen Aufbau eingesetzt werden. In den jeweiligen Zwischenstufen mit Aminüberschuß ist es möglich, freies Restamin destillativ gegebenenfalls unter Vacuum zu entfernen. Es können auch beliebige Mischungen der erfindungsgemäßen Epoxide hergestellt werden, z. B. um bestimmte Verarbeitungsviskositäten und Eigenschaften der gehärteten Systeme zu erzielen.

Als Komponente (D) können für ein Zweikomponentenverfahren alle bekannten Aminhärtungsmittel für 1,2-Epoxide eingesetzt werden. Beispielhaft seien genannt: aliphatische Amine, wie die Polyalkylenpolyamine, Diäthylentriamin und Triäthylentetramin, Trimethylhexamethylendiamin, 2-Methyl-pentandiamin (®Dytek A), Oxyalkylenpolyamine wie Polyoxypropylendi- und -triamin und 1,13-Diamino-4,7,10-trioxatridecan, cycloaliphatische Amine, wie Isophorondiamin (3,5,5-Trimethyl-3-aminomethyl-cyclohexylamin), 4,4'-Diaminodicyclohexylmethan, 3,3'-Dimethyl-4,4'-diamino-dicyclohexylmethan, N-Cyclohexyl-1,3-propandiamin, 1,2-Diaminocyclohexan, Piperazin, N-Aminoäthylpiperazin, TCD-Diamin(3(4), 8(9)-Bis(aminomethyl)-tricyclo-[5.2.1.0$^{2,6}$]decan); araliphatische Amine, wie Xylylendiamine; aromatische Amine, wie Phenylendiamine und 4,4'-Diaminodiphenylmethan; Addukthärter, die Umsetzungsprodukte von Epoxidverbindungen, insbesondere Glycidyläther des Bisphenol A und F, mit überschüssigem Amin sind; Polyamidoaminhärter, die durch Kondensation von Mono- und Polycarbonsäuren mit Polyaminen erhalten werden, insbesondere durch Kondensation von Dimerfettsäuren mit Polyalkylenpolyaminen; und Mannichbasenhärter, die durch Umsetzung von ein- oder mehrwertigen Phenolen mit Aldehyden, insbesondere Formaldehyd, und Polyaminen erhalten werden.

Besonders bevorzugt als Härtungsmittel für die Zweikomponentenarbeitsweise sind Mannichbasen z. B. auf Basis von Phenol und/oder Resorcin, Formaldehyd und m-Xylylendiamin sowie N-Aminoäthylpiperazin und Abmischungen von N-Aminoäthylpiperazin mit Nonylphenol und/oder Benzylalkohol.

Häufig ist es erwünscht, mit Einkomponentensystemen zu arbeiten, da vom Verarbeiter keine Abmischung von Einzelkomponenten direkt vor dem Gebrauch des Systems, z. B. als Klebstoff, vorgenommen werden muß. Einkomponentensysteme erhält man durch Mischung der Epoxidkomponenten (A), (B) und (C) mit einem latenter Härtungsmittel. Solche Mischungen weisen im allgemeinen eine Lagerstabilität von mehreren Wochen oder Monaten bei Raumtemperatur auf, d. h. die Viskosität bleibt in diesem Zeitraum konstant oder steigt nur geringfügig. Eines der weit verbreiteten latenten Härtungsmittel ist Dicyandiamid.

Dicyandiamid (Cyanoguanidin, ®Dyhard 100 der SKW) ist bei Raumtemperatur selbst kein Härtungsmittel. Es zersetzt sich bei höheren Temperaturen und bewirkt über reaktive Spaltprodukte eine Härtung des Epoxidsystems. Flexible Einkomponenten-Epoxidharzsysteme werden durch Dispergierung des latenten Härters, beispielsweise des Dicyandiamids als Komponente (D) in den Epoxidverbindungen (A), (B) und (C) ggf. mit Zusatzstoffen (E), wie beispielsweise eines Thixotropiermittels hergestellt. Weitere geeignete latente Härter sind beispielsweise aromatische Amine, wie z. B. 4,4'- oder 3,3'-Diaminodiphenylsulfon, Guanidine, wie z. B. 1-o-Tolylbiguanid, modifizierte Polyamine, wie z. B. ®Anchor 2014 S (Anchor Chemical UK Limited, Manchester), Carbonsäurehydrazide, wie z. B. Adipinsäuredihydrazid, Isophthalsäuredihydrazid oder Anthranilsäurehydrazid, Triazinderivate, wie z. B. 2-Phenyl-4,6-diamino-s-triazin (Benzoguanamin) und Melamin.

Die Härter (D) werden im allgemeinen in Mengen von 0,01 bis 50, vorzugsweise von 1 bis 40 %, bezogen auf die Summe der Massen der Verbindungen (A), (B) und (C) eingesetzt. Die Härtung mit Dicyandiamid erfolgt im allgemeinen in Mengen von 0,01 bis 20, vorzugsweise 0,5 bis 15 %, bezogen auf die Summe der Massen der Verbindungen (A), (B) und (C). Gegebenenfalls kann ein Beschleuniger in einer Menge von 0,01 bis 10, vorzugsweise mit 0,1 bis 7 %, bezogen auf die Summe der Massen der Verbindungen (A), (B) und (C) (vgl. Zusatzstoffe (E), Beschleuniger) zugesetzt werden.

Bei der Einarbeitung der Härter (D) sowie gegebenenfalls bei der Zugabe der Beschleuniger (vgl. Zusatzstoffe (E), Beschleuniger) muß die Temperatur unterhalb der Reaktionstemperatur des entsprechenden Harz/Härtersystems liegen. Dabei kann es notwenig werden, bei dem Dispergiervorgang das Reaktionsgemisch zu kühlen.

Mit den für das Zweikomponentenverfahren angegebenen Polyaminhärtern ist es prinzipiell möglich, die Komponenten (A), (B) und (C) bei Raumtemperatur zu härten. Bei diesen relativ niedrigen Temperaturen werden aber häufig keine optimalen Eigenschaften des gehärteten Systems erzielt. Für das Einkomponentensystem mit latenten Härtern, wie z. B. Dicyandiamid, ist ohnehin eine erhöhte Temperatur zur Initiierung der Vernetzungsreaktion erforderlich. Die Härtungstemperatur der erfindungsgemäßen Zusammensetzung liegt im allgemeinen bei 5 bis 260 °C, vorzugsweise bei 120 bis 200 °C. Die Härtungszeit bei Temperaturen von 120 bis 200 °C liegt im allgemeinen bei 10 bis 200 Minuten.

Die erfindungsgemäße Zusammensetzung kann neben den Komponenten (A), (B), (C) und (D) noch weitere übliche Zusatzstoffe (E) enthalten wie beispielsweise Beschleuniger bzw. Härtungskatalysatoren, weitere Härter und zusätzliche härtbare Harze oder Extenderharze sowie die üblichen Lackadditive wie Pigmente, Pigmentpasten, Farbstoffe, Antioxidantien, Stabilisierungsmittel, Verlauf-bzw. Verdickungsmittel (Thixotropierungsmittel), Entschäumer und/oder Netzmittel, Reaktiwerdünner, Füllstoffe, Weichmacher, flammhemmende Stoffe und dgl. Diese Additive können den härtbaren Mischungen gegebenenfalls längere Zeit vorher oder erst unmittelbar vor der Verarbeitung zugegeben werden.

Als Beschleuniger, insbesondere für die Härtung nach dem Zweikomponentenverfahren mit Aminhärtungsmitteln, können beispielsweise Phenole und Alkylphenole mit 1 - 12 C-Atomen in der Alkylgruppe, Kresol, die verschiedenen Xylenole, Nonylphenol, Polyphenole wie Bisphenol A und F, OH-gruppenhaltige aromatische Carbonsäuren wie Salicylsäure, m-Hydroxybenzoesäure, p-Hydroxybenzoesäure sowie tert. Amine, wie Benzyldimethylamin, 1,3,5-Tris(dimethylamino)phenol, Mischungen aus N-Aminoäthylpiperazin und Alkoholaminen (vgl. DE-A 29 41 727), ®Accelerator 399 (Texaco Chemical Company) und dergleichen eingesetzt werden.

Häufig ist es erforderlich, auch die Härtung im Einkomponentenverfahren mit latenten Härtungsmitteln, wie z. B. Dicyandiamid, zu beschleunigen. Als geeignete Beschleuniger sind u. a. zu nennen: Tertiäre Amine, wie z. B. Benzyldimethylamin, 1,4-Diazabicyclo[2.2.2]octan (Dabco), N,N-Dimethyläthanolamin, 2,4-Dimethylpyridin, 4-Dimethylaminopyridin, substituierte Harnstoffe, wie z. B. N,N-Dimethyl-N'-(3-chlor-4-methylphenyl)harnstoff (Chlortoluron), N,N-Dimethyl-N'-(4-chlorphenyl)harnstoff (Monuron) oder N,N-Dimethyl-N'-(3,4-dichlorphenyl)harnstoff (Diuron), 2,4-Bis(N',N'-dimethylureido)toluol oder 1,4-Bis(N',N'-di-methylureido)benzol, weiterhin $BF_3$-Aminkomplexe, quaternäre Ammoniumverbindungen, wie z. B. Benzyltrimethylammoniumchlorid, Tetramethylammoniumchlorid, Tetraäthylammoniumchlorid, Benzyldodecyldiäthylammoniumchlorid, Mercaptane, wie z. B. Triglykoldimercaptan oder 1,2-Bis(2'-mercaptoäthoxy)äthan, die unter dem Namen ®Thiokol bekannten polymeren Polysulfide der Formel $HS(CH_2CH_2OCH_2OCH_2CH_2SS)_n CH_2CH_2OCH_2OCH_2CH_2SH$, Trimethylolpropantrithioglykolat, Dipentaerythrit-hexa(3-mercaptopropionat) oder Trithiole, wie z. B. 2,4,6-s-Triazintrithiol, Polyoxyalkylendithiole oder -trithiole sowie die unter der Bezeichnung ®Cap Cure (Henkel Napco AG) vertriebenen Polyoxyalkylen-Derivate, wie z. B. ®Cap Cure WR 6 oder WR 36 und ®Cap Cure 3-800, und insbesondere Imidazoline und Imidazole.

Im einzelnen kommen als Imidazoline beispielsweise folgende Verbindungen in Frage: 2-Methylimidazolin, 2-Äthyl-4-methyl-imidazolin, 2-Phenylimidazolin, 2-Undecylimidazolin, 2-Heptadecylimidazolin, 2-Äthylimidazolin, 2-Isopropylimidazolin, 2,4-Dimethyl-imidazolin, 2-Phenyl-4-methyl-imidazolin, 2-Benzylimidazolin, 2-(o-Tolyl)-imidazolin, 2-(p-Tolyl)-imidazolin, Tetramethylen-bis-imidazolin, 1,1,3-Trimethyl-1,4-tetramethylen-bis-imidazolin, 1,3,3-Trimethyl-1,4-tetramethylen-bis-imidazolin, 1,1,3-Trimethyl-1,4-tetramethylen-bis-4-methyl-imidazolin, 1,2-Phenylen-bis-imidazolin, 1,3-Phenylen-bis-imidazolin, 1,4-Phenylen-bis-imidazolin, 1,4-Phenylen-bis-4-methylimidazolin. Es können auch beliebige Mischungen der Imidazoline eingesetzt werden.

Geeignete Imidazole sind Imidazol selbst, 1-Methyl-imidazol, 2-Methyl-imidazol, 4-Methyl-imidazol, 5-Methyl-imidazol, 1-Äthyl-imidazol, 2-Äthyl-imidazol, 1-Propyl-imidazol, 2-Propyl-imidazol, 2-Isopropyl-imidazol, 1-Butyl-imidazol, 2-Octyl-imidazol, 2-Undecyl-imidazol, 2-Heptadecyl-imidazol, 2-Cyclohexyl-imidazol, 1-Phenyl-imidazol, 2-Phenylimidazol, 2,4-Dimethyl-imidazol, 1,2-Dimethyl-imidazol, 4,5-Dimethyl-imidazol, 2-Äthyl-4-methyl-imidazol, 1-Äthyl-2-methyl-imidazol, 1-Methyl-2-isopropyl-imidazol, 4-Butyl-5-äthyl-imidazol, 2-Cyclohexyl-4-methyl-imidazol, 1-Benzyl-2-methyl-imidazol, 2-Phenyl-4-methyl-imidazol, 4,5-Diphenyl-imidazol, 2-Äthyl-4-phenyl-imidazol, 2,4,5-Trimethyl-imidazol, 2,4,5-Tricyclohexyl-imidazol, 1,2,4,5-Tetramethylimidazol sowie Benzimidazole und deren Derivate. Es können auch beliebige Mischungen der Imidazole eingesetzt werden.

Als Verlaufmittel können zum Beispiel Acetale, wie Polyvinylformal, Polyvinylacetal, Polyvinylbutyral, Polyvinylacetobutyral u. a. Polyäthylen- und Polypropylenglykole, Siliconharze, Gemische von Zinkseifen, von Fettsäuren und aromatischen Carbonsäuren, insbesondere handelsübliche Produkte auf Basis von Polyacrylaten eingesetzt werden. Die Verlaufmittel können auch der Komponente (A) in Mengen von 0,1 - 4 Gew.-%, vorzugsweise 0,2 - 2,0 Gew.-% zugesetzt werden.

Als Haftvermittler und Hydrophobierungsmittel können u. a. Silane eingesetzt werden. Diese können sowohl mit dem anorganischen Untergrund als auch mit dem organischen Polymeren (Klebstoff, Beschichtungsmasse oder dgl.) unter Ausbildung von festen Bindungen reagieren. Durch die Haftverbesserung können die mechanischen Werte, insbesondere nach Feuchtigkeitsbeanspruchung, verbessert werden. Entsprechende Produkte werden z. B. unter der Bezeichnung ®Dynasylan von Hüls Aktiengesellschaft, Marl bzw. als ®Silan von Degussa AG angeboten.

Die Farbstoffe und Pigmente können sowohl anorganischer als auch organischer Natur sein. Beispielsweise seien genannt Titandioxid, Zinkoxid, Ruß, Leitfähigkeitsruß wie z. B. ®Printex XE 2 der Degussa AG. Die organischen Farbstoffe und Pigmente sind so auszuwählen, daß sie bei den Härtungstemperaturen stabil sind und zu keinen untolerierbaren Farbtonverschiebungen führen.

Geeignete Füllstoffe sind zum Beispiel Quarzmehl, Silikate, Kreide, Gips, Kaolin, Glimmer, Schwerspat, organische Füllstoffe wie z. B. Polyamidpulver, organische und anorganische Fasern und dergleichen. Als Thixotropier- und Verdickungsmittel können beispielsweise ®Aerosil (hochdisperses Siliciumdioxid z. B. die Typen 150, 200, R 202, R 805 der Degussa), Bentonit-Typen (z. B. ®Sylodex 24 von Grace) sowie ®Bentone (NL Chemicals) verwendet werden.

Die Einarbeitung der Zusatz- und Füllstoffe erfolgt im allgemeinen mit Zwangsmischern, wie z. B. Dissolvern und Knetern. Auch hier kann es notwendig sein, durch eine Kühlung des formulierten erfindungsgemäßen Harz/Härter-Systems eine vorzeitige Reaktion der Komponenten zu vermeiden.

Die erfindungsgemäße Epoxidharz-Zusammensetzung kann Verwendung finden zum Beschichten und Verkleben der mannigfaltigsten Werkstoffe, zum Beispiel Metalle, Leichtmetalle, aber auch nichtmetallische Werkstoffe wie Keramik, Glas, Leder, Textilien, Gummi, Holz, Kunststoff. Bevorzugt ist die Verwendung des Einkomponenten-Klebstoff, insbesondere als Konstruktionskleberfür die Automobilindustrie. Die Verklebungen können mit denselben oder mit anderen Materialien erfolgen.

Das Auftragen auf die Substrate erfolgt nach den bekannten Verfahren, wie z. B. Streichen, Walzen, Ablegen als Kleberaupe aus geeigneten Aggregaten.

## I. Herstellung der Epoxidharzmischungen

### Beispiel 1 (Vergleich)

Zu 100 Gewichtsteilen eines flüssigen Epoxidharzes auf Bisphenol-A-Basis mit einem Epoxidäquivalent (EV) von 183 g/mol werden in einem Vierhalskolben mit Rührer, Thermometer und Kühler unter Stickstoff 43,5 Gewichtsteile ®Jeffamine M 600[1)] gegeben, auf 90 °C geheizt und solange bei dieser Temperatur gehalten (ca. 5 Stunden) bis der EV konstant bleibt. Nach einer Stunde Nachhaltezeit wird gekühlt und der Kolben entleert. Das Epoxidharz hat folgende Kenndaten:

[1)] ®Jeffamine M 600 hat nach Herstellermerkblatt (Texaco Chemical Company) eine Molmasse von 600 g/mol und ein PO/EO-Verhältnis von 9/1.

| | |
|---|---|
| Epoxidäquivalent<br>Aminzahl<br>Viskosität 25 °C | 367 g/mol<br>32,0 mg KOH / g<br>47748 mPa.s |

**Beispiel 2**

Zu 2040 g ®Beckopox EP 075 (Polyoxypropylenglykoldiglycidyläther, Hoechst) mit einem Epoxidäquivalent (EV) von 340 g/mol werden in einem Vierhalskolben mit Rührer, Thermometer und Kühler unter Stickstoff 110 g 2-Aminobutan gegeben. Das Reaktionsgemisch wird auf 60 °C erwärmt und zwei Stunden bei dieser Temperatur gehalten, dann wird langsam innerhalb von zwei Stunden auf 120 °C geheizt und solange gehalten (ca. 5 Stunden) bis das Epoxidäquivalent einen Wert von 698 erreicht hat. Das Reaktionsprodukt wird sofort auf Raumtemperatur gekühlt. Die Viskosität beträgt 422 mPa.s (25 °C) und die Aminzahl 42,9 mg KOH / g.

**Beispiel 3**

90 Gewichtsteile des Epoxidharzes nach Beispiel 1 werden mit 10 Gewichtsteilen des Epoxids nach Beispiel 2 homogen verrührt. Die Mischung hat einen EV von 384 g/mol und eine Viskosität von 23330 mPa.s (25 °C).

**Beispiel 4**

Zu 680 g ®Beckopox EP 075 (EV 340g/mol) werden in einem Vierhalskolben mit Rührer, Thermometer und Kühler unter Stickstoff 50 g Cyclohexylamin gegeben. Das Reaktionsgemisch wird auf 120 °C erwärmt und bei dieser Temperatur gehalten (ca. 4 Stunden) bis ein EV von 743 g/mol erreicht ist. Es wird sofort auf Raumtemperatur gekühlt. Die Viskosität beträgt 581 mPa.s (25 °C) und die Aminzahl 42,5 mg KOH / g.

**Beispiel 5**

90 Gewichtsteile des Epoxidharzes nach Beispiel 1 werden mit 10 Gewichtsteilen des Epoxids nach Beispiel 4 homogen verrührt. Die Mischung hat einen EV von 385 g/mol und eine Viskosität von 25980 mPa.s (25 °C).

**Beispiel 6**

Zu 680 g ®Beckopox EP 075 (EV 340 g/mol) werden in einem Vierhalskolben mit Rührer, Thermometer und Kühler unter Stickstoff 54 g Benzylamin gegeben. Das Reaktionsgemisch wird auf 120 °C erwärmt und bei dieser Temperatur gehalten (ca. 3 Stunden) bis ein EV von 726 g/mol erreicht ist. Es wird sofort auf Raumtemperatur gekühlt. Die Viskosität beträgt 544 mPa.s (25 °C) und die Aminzahl 40,7 mg KOH / g.

**Beispiel 7**

90 Gewichtsteile des Epoxidharzes nach Beispiel 1 werden mit 10 Gewichtsteilen des Epoxids nach Beispiel 6 homogen verrührt. Die Mischung hat einen EV von 384 g/mol und eine Viskosität von 24900 mPa.s (25 °C).

**II. Herstellung von Einkomponenten-Klebstoffen**

Die Epoxidharzkomponente A wird auf 60 °C erwärmt und Dicyandiamid (®Dyhard 100, SKW Trostberg) in dem Harz mit einem Dissolver mit 10000 Umdrehungen/Minute 15 Minuten lang dispergiert. Anschließend wird das ®Aerosil portionsweise zugegeben und je nach der Viskosität die erfindungsgemäße Mischung mit 250 bis 4000 Umdrehungen/Minute mit dem Dissolver homogenisiert.

Aus den Beispielen I. 1, 2, 3, 5 und 7 der Epoxidharzmischungen werden die Klebstoff-Formulierungen II. 1 bis II. 9 angefertigt (siehe Tabellen 1 und 3).

### III. Prüfverfahren

#### 1. Vorbereitung der Prüfkörper zur Messung der Zugscherfestigkeit

Die Zugscherprüfkörper werden nach DIN 53 281 Teil 2 aus Stahlblech Qualität ST 1405 von 0,75 mm Dicke hergestellt. Die Stahlstreifen werden im nicht entfetteten Zustand auf eine Fläche von 400 $mm^2$ überlappend verklebt. Mit Abstandshaltern aus PTFE-Folie wird eine definierte Klebstoffschicht von 0,2 mm eingestellt. Die Aushärtung des Klebstoffes erfolgt 30 Minuten bei 180 °C. Nach dem Erkalten der Prüfkörper wird seitlich ausgetretener Klebstoff abgeschnitten.

#### 2. Messung der Zugscherfestigkeit

Die Zugscherfestigkeit der nach III.1. angefertigten Prüfkörper wird nach DIN 53 283 als Mittelwert von 5 Einzelwerten auf einer Zugprüfmaschine nach DIN 51 221, Teil 2 der Firma Zwick gemessen.

#### 3. Vorbereitung der Prüfkörper für den Salzsprühtest

Die nach III.1. vorbereiteten Prüfkörper werden ohne Entfettung mit einem Zweikomponenten-Epoxidharz-Primer zweimal grundiert. Dabei wird die gesamte Oberfläche einschließlich der Überlappungszone beschichtet. Nach jeder Behandlung wird abgelüftet und 10 Minuten bei 120 °C eingebrannt.

#### 4. Salzsprühtest

Die nach III.3. vorbereiteten Prüfbleche werden z. B. 1000 Stunden in einem Salzsprühtestgerät nach DIN 50 021 gelagert. Danach werden die Prüfkörper 3 Stunden bei Raumtemperatur getrocknet und die Zugscherfestigkeit nach III.2. gemessen.

$$\text{Restfestigkeit} = \frac{\text{Zugscherfestigkeit nach z.B. 1000 Stunden Salzsprühtest}}{\text{Zugscherfestigkeit vor dem Salzsprühtest}} \times 100\,\%$$

#### 5. Vorbereitung der Prüfkörper zur Messung des Schälwiderstandes

Die Prüfkörper werden nach DIN 53 281, Teil 2 aus Stahlblech Qualität ST 1203 von 0,5 mm Dicke hergestellt. Die Stahlstreifen werden mit Aceton entfettet und mit Hilfe eines Schraubstocks zu einem Winkel von 90° gebogen. Der nach II. hergestellte Klebstoff wird mit einem Filmziehgerät in einer Schicht von 0,1 mm auf die Außenfläche des längeren Schenkels aufgetragen. Der so mit Klebstoff beschichtete Metallstreifen wird nun mit einem weiteren nicht mit Klebstoff beschichteten Metallstreifen zusammengefügt, daß sich ein klebefugensymmetrischer T-förmiger Prüfkörper mit einer Klebefläche von 185 x 30 mm ergibt.

Die Aushärtung des Klebstoffes erfolgt in 30 Minuten bei 180 °C. Nach dem Abkühlen wird seitlich ausgetretener Klebstoff abgeschnitten.

#### 6. Messung des Schälwiderstandes

Der Schälwiderstand der nach III.5. hergestellten Prüfkörper wird nach DIN 53 282 als Mittelwert aus 5 Einzelwerten auf einer Zugprüfmaschine nach DIN 51 221, Teil 3 der Firma Zwick bestimmt.

#### 7. Vorbereitung der Prüfkörper für den Dornbiegeversuch

Der nach II. hergestellte Klebstoff wird mit einem Filmziehgerät in einer Schicht von 0,2 mm auf einen mit Aceton entfetteten Stahlstreifen (ST 1203 0,5 mm Dicke) von 110 mm Länge und 30 mm Breite aufgezogen. Die Härtung des Klebstoffs erfolgt 30 Minuten bei 180 °C.

## 8. Messung der Kälteelastizität mit dem Dornbiegeversuch

Die Prüfung erfolgt mit dem in DIN 53 152 beschriebenen Dornbiegegerät vom Typ 2 mit einem zylindrischen Dorn von 25 mm Durchmesser bei unterschiedlichen Temperaturen. Die Kälteelastizität wird in Stufen von je 5 °C ausgehend von + 5 °C an jeweils 5 Prüfkörpern pro Prüftemperatur bestimmt. Als ausreichend kälteelastisch werden die Proben angesehen, die keine Risse oder Ablösungen zeigen.

## Erläuterungen zu den Beispielen

Aus den Beispielen I. 3, 5 und 7 ist zu ersehen, daß die Epoxidharzkomponente (A) durch die Zugabe von 10 % Epoxidkomponente (B) auf die Hälfte der ursprünglichen Viskosität (gemessen in mPa.s) herabgesetzt wird.

Diese erfindungsgemäßen Mischungen lassen sich leichter verarbeiten als die Epoxidharze (A) alleine. Die für Konstruktionsklebstoffe geforderten mechanischen Werte und Salzsprühtestbeständigkeit bleiben erhalten (vergleiche Tabelle 2). Zusätzlich wird durch die Epoxidkomponente (B) die Elastizität des Systems erhöht. Dies kann mit den Tieftemperaturversuchen nach dem Dornbiegetest (Tabelle 3) gezeigt werden.

Mit der erfindungsgemäßen Epoxidharz-Zusammensetzung werden somit elastische Systeme mit hervorragenden Eigenschaften erhalten, die den Stand der Technik deutlich übertreffen.

Tabelle 1

Zusammensetzung der Klebstoffe

| Beispiel II | | 1 (Vergleich) | 2 | 3 | 4 |
|---|---|---|---|---|---|
| Epoxidharzmischung Beispiel I | | 1 | 3 | 5 | 7 |
| | GT | 100 | 100 | 100 | 100 |
| ®Dyhard 100 (Dicyandiamid der SKW Trostberg) | GT | 10 | 10 | 10 | 10 |
| ®Aerosil 100 (Degussa AG) | GT | 4 | 4 | 4 | 4 |

GT = Gewichtsteile

Tabelle 2

| Beispiel | Zugscherfestigkeit nach DIN 53 283 N/mm² | Schälwiderstand nach DIN 53 282 N/mm | Restfestigkeit nach Salzsprühtest (DIN 50 021) nach 1000 Stunden % |
|---|---|---|---|
| II.1. (Vergleich) | 17,2 | 6,0 | 100,6 |
| II.2. | 17,3 | 5,5 | 94,2 |
| II.3. | 17,4 | 5,1 | 97,7 |
| II.4. | 17,0 | 5,7 | 95,9 |

Tabelle 3

Zusammensetzung der Klebstoffe und Prüfung der Kälteelastizität

| Beispiel II | | 5 (Vergleich) | 6 | 7 | 8 | 9 |
|---|---|---|---|---|---|---|
| Epoxidverbindung (A) Beispiel I.1. | GT | 100 | 90 | 80 | 50 | 40 |
| Epoxidverbindung (B) Beispiel I.2. | GT | - | 10 | 20 | 50 | 60 |
| ®Dyhard 100 (Dicyandiamid der SKW Trostberg) | GT | 10 | 10 | 10 | 10 | 10 |
| ®Aerosil 200 (Degussa AG) | GT | 4 | 4 | 4 | 4 | 4 |
| Dornbiegeversuch | 5 °C | n. i. O. | i. O. | | | |
| DIN 53 152 | 0 °C | | n. i. O. | i. O. | | |
| 25 mm Dorn | -5 °C | | | n. i. O. | i. O. | i. O. |
| | -10 °C | | | | | i. O. |

Erklärung: i.O. = keine Rißbildung und kein Abplatzen

n.i.O. = Rißbildung und/oder Abplatzen

## Patentansprüche

1. Epoxidharz-Zusammensetzung bestehend aus

   (A) Verbindungen, die mindestens zwei 1,2-Epoxidgruppen enthalten, die Umsetzungsprodukte sind aus

(A1) Verbindungen mit mindestens zwei 1,2-Epoxidgruppen pro Molekül
(A2) gegebenenfalls in Abmischung mit Mono-Epoxiden,
(A3) Polyoxyalkylenaminen und gegebenenfalls
(A4) Polycarbonsäuren

(B) Verbindungen, die mindestens zwei 1,2-Epoxidgruppen enthalten, die Umsetzungsprodukte sind aus

(B1) Verbindungen mit mindestens zwei 1,2-Epoxidgruppen pro Molekül
(B2) gegebenenfalls in Abmischung mit Mono-Epoxiden,
(B3) Aminen der Formel

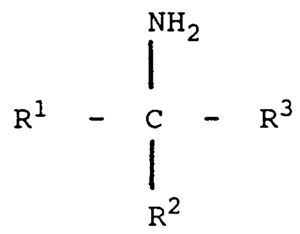

in der bedeuten

| | |
|---|---|
| $R^1$ | verzweigter oder unverzweigter aliphatischer, cycloaliphatischer, araliphatischer oder aromatischer, gegebenenfalls durch Hydroxy, Alkoxy oder Halogen substituierter Kohlenwasserstoffrest mit 1 bis 30 Kohlenstoffatomen, |
| $R^2$ und $R^3$ | jeweils unabhängig voneinander Wasserstoff oder einen der unten genannten Reste $R^1$ |

mit der Maßgabe, daß die Aminogruppe nicht direkt an einem Aromaten gebunden ist und für den Fall, daß $R^2$ und $R^3$ Wasserstoff sind, der verbleibende Rest $R^1$ einer der folgenden Substituenten ist

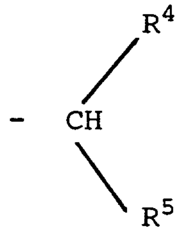

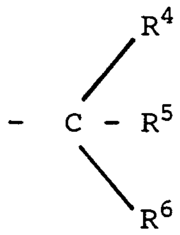

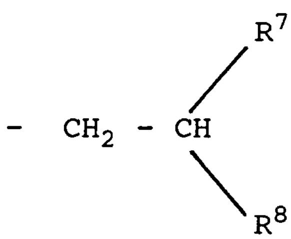

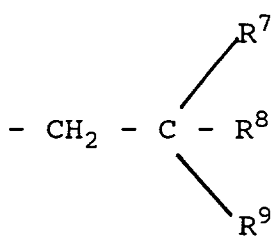

wobei die Reste

$R^4$ bis $R^9$ jeweils unabhängig voneinander die Bedeutung verzweigter oder unverzweigter aliphatischer, cycloaliphatischer, araliphatischer oder aromatischer, gegebenenfalls durch Hydroxy-, Alkoxy-oder Halogen-Gruppen substituierter Kohlenwasserstoffrest mit 1 bis 30 Kohlenstoffatomen haben, und

$R^1$ und $R^2$ einen gegebenenfalls substituierten cycloaliphatischen Ring mit bis zu 8 Kohlenstoffatomen bilden können, wobei $R^3$ dann ein Wasserstoffatom bedeutet, und

(C) 1,2-Epoxidverbindungen, die nicht gleich (A1), (A2), (B1) oder (B2) sind und/oder nicht umgesetzte Anteile der Verbindungen (A1), (A2), (B1) und (B2) aus der Herstellung der Verbindungen (A) und (B), und

(D) Härtungsmitteln und

(E) gegebenenfalls weiteren Zusätzen.

**2.** Zusammensetzung nach Anspruch 1, dadurch gekennzeichnet, daß die Verbindungen (A1) und (B1) Epoxidäquivalentgewichte von 100 bis 500 g/mol aufweisen.

**3.** Zusammensetzung nach Anspruch 2, dadurch gekennzeichnet, daß die Verbindungen (A1) aus der Gruppe der Diglycidyläther von Bisphenol-A und Bisphenol F ausgewählt sind und die Verbindungen (B1) Polyoxyalkylenglykoldiglycidyläther sind.

**4.** Zusammensetzung nach Anspruch 3, dadurch gekennzeichnet, daß die Verbindungen (B1) Polyoxypropylenglykoldiglycidyläther sind.

**5.** Zusammensetzung nach Anspruch 1, dadurch gekennzeichnet, daß die Polyoxyalkylenamine (A3) ausgewählt sind aus den Gruppen der Polyoxyalkylendiamine und Polyoxyalkylenmonoamine.

**6.** Zusammensetzung nach Anspruch 5, dadurch gekennzeichnet, daß die Polyoxyalkylenmonoamine (A3) Molmassen von 130 bis 900 g/mol aufweisen, gegebenenfalls in Abmischung mit solchen der Molmasse 900 bis 5000 g/mol.

**7.** Zusammensetzung nach Anspruch 5, dadurch gekennzeichnet, daß die Polyoxyalkylenmonoamine die allgemeine Formel

$CH_3\text{-}(O\text{-}CH_2\text{-}CH_2)_y\text{-}[O\text{-}CH_2\text{-}CH(CH_3)]_x\text{-}NH_2$

haben, in der y eine ganze Zahl von 0 bis 10 und x eine ganze Zahl von 1 bis 41 ist.

**8.** Zusammensetzung nach Anspruch 1, dadurch gekennzeichnet, daß Polycarbonsäuren (A4) Dimerfettsäuren mit einer Säurezahl von 150 bis 230 mgKOH/g sind.

**9.** Zusammensetzung nach Anspruch 1, dadurch gekennzeichnet, daß die Polycarbonsäure (A4) Dicarbonsäuren der Formel

(1) $HOOC - CH_2 - [OR^{10}]_n - O - CH_2 - COOH$

sind, in der bedeuten

$R^{10}$ = Alkylenrest mit 2 bis 5 C-Atomen und
n = 0 oder eine ganze Zahl von 1 bis 300.

**10.** Zusammensetzung nach Anspruch 9, dadurch gekennzeichnet, daß $R^{10}$ Formel (1) einen Äthylenrest und n 1 bis 50 bedeuten.

**11.** Zusammensetzung nach Anspruch 9, dadurch gekennzeichnet, daß die Komponente (A4) Polyglykolsäure 600 ist.

**12.** Zusammensetzung nach Anspruch 1, dadurch gekennzeichnet, daß Amine (B3) der Formel

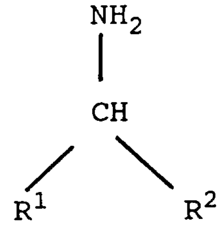

eingesetzt werden,
in der $R^1$ und $R^2$ die Bedeutung von $R^1$ in Anspruch 1 haben oder $R^1$ und $R^2$ einen gegebenenfalls substituierten cycloaliphatischen Ring mit bis zu 8 Kohlenstoffatomen bilden können.

**13.** Zusammensetzung nach Anspruch 12, dadurch gekennzeichnet, daß als Amin (B3) 2-Aminobutan eingesetzt wird.

**14.** Zusammensetzung nach Anspruch 12, dadurch gekennzeichnet, daß als Amin (B3) Cyclohexylamin eingesetzt wird.

**15.** Zusammensetzung nach Anspruch 12, dadurch gekennzeichnet, daß als Amin (B3) 2-Äthylhexylamin eingesetzt wird.

**16.** Zusammensetzung nach Anspruch 12, dadurch gekennzeichnet, daß die Amine (B3) t-Alkylamine mit 4 bis 22 Kohlenstoffatomen sind.

**17.** Zusammensetzung nach Anspruch 1, dadurch gekennzeichnet, daß die Masse der Komponente (B) 5 bis 150 % bezogen auf die Summe der Massen der Komponente (A) und gegebenenfalls der Komponente (C) beträgt.

**18.** Zusammensetzung nach Anspruch 1, dadurch gekennzeichnet, daß das Härtungsmittel (D) ein latentes Härtungsmittel ist.

**19.** Zusammensetzung nach Anspruch 18, dadurch gekennzeichnet, daß das Härtungsmittel (D) Dicyandiamid ist.

**20.** Zusammensetzung nach Anspruch 1, dadurch gekennzeichnet, daß das Härtungsmittel (D) N-Aminoäthylpiperazin ist.

**21.** Zusammensetzung nach Anspruch 1, dadurch gekennzeichnet, daß das Härtungsmittel (D) eine Mischung aus N-Aminoäthylpiperazin und Nonylphenol und/oder Benzylalkohol ist.

**22.** Zusammensetzung nach Anspruch 1, dadurch gekennzeichnet, daß sie zusätzlich einen Beschleuniger enthält.

**23.** Verwendung der Zusammensetzung nach Anspruch 1 als Klebstoff, insbesondere als Einkomponenten-Klebstoff.

**24.** Verwendung der Zusammensetzung nach Anspruch 1 als Konstruktionskleber für die Automobilindustrie.